# EUROPEAN PATENT APPLICATION

(11) **EP 4 649 816 A1**
(43) Date of publication of application: **19.11.2025**
(21) Application number: 25175844.7
(22) Date of filing: 12.05.2025
(51) Int. Cl.: A01F 15/07

(54) **BALE WRAPPER**

(30) Priority: 17.05.2024 GB 202407067
(71) Applicant: Kuhn-Geldrop B.V., 5667 KP Geldrop (NL)
(72) Inventor: Van Doormaal, Thomas Petrus Lambertus, 5089 NK HAGHORST (NL)
(74) Representative: Murgitroyd & Company

(57) **Abstract**

There is provided an agricultural bale wrapper for wrapping an agricultural bale 2. The agricultural bale wrapper may comprise a bale support for supporting the bale 2 and rotating the bale 2 about a first axis, X. The bale wrapper may further comprise a film dispenser holding a roll 8 of stretch film 10. The bale wrapper may further comprise means configured to provide relative rotation between the bale support and the film dispenser about a second axis, Y, that extends substantially perpendicular to the first axis, X, so that the stretch film 10 applied to the bale 2 forms a bale wrapping that substantially completely covers the bale 2. The bale wrapper may further comprise at least one film pre-stretcher unit 9a configured to pre-stretch the stretch film 10 by an elongation amount before the stretch film 10 is applied to the bale 2. The at least one film pre-stretcher unit 9a may comprise at least two pre-stretcher rollers 3, 7 configured to perform elongation of the stretch film 10. The at least two pre-stretcher rollers 3, 7 may be configured to rotate relative to each other with a predetermined angular speed ratio 5. The stretch film 10 is drawn over the surfaces of the at least two pre-stretcher rollers 3, 7. The ratio of the circumferential speeds of the at least two pre-stretcher rollers 3, 7 may vary over the width, W, of the stretch film 10. There is further provided a method for wrapping an agricultural bale 2.

## Description

The present invention relates to a bale wrapper that applies a stretch film wrapping to an agricultural bale. The present invention also relates to an agricultural bale wrapping method.

The agricultural bale may for example be cylindrical, which may be called a "round" bale. Such a bale typically has outer surfaces including a cylindrical surface, extending around the circumference of the bale, and substantially round end faces at either end of the cylindrical surface, thus forming a cylinder bale shape.

Bale wrappers *per se* are well known to those of ordinary skill in the art, and therefore will not be described in detail herein. In general terms only, a bale wrapper has a bale support for supporting a, for example, round bale with its longitudinal axis extending generally parallel to the ground, and which may operate to rotate the, for example, round bale generally about its axis (a first axis) while relative rotation takes place between a film dispenser reel and the bale support about a second axis which extends substantially perpendicular to the first axis during a wrapping cycle.

A bale wrapper apparatus may be an independently operated machine, carrying out wrapping of one or more bales only, or it may be incorporated in a combined or integrated apparatus (combination baler/bale wrapper) which is able to carry out bale-formation and bale wrapping in a single apparatus.

A bale wrapper apparatus may wrap bales on an individual basis, wrapping each bale individually before beginning wrapping the next bale (for example a bale wrapper apparatus of the table wrapper or satellite wrapper kind), or it may wrap bales in a stack where several bales are added in line to a larger wrapped bale stack, for example a bale wrapper apparatus of the inline wrapper kind. Besides wrapping bales in a stack, such an inline bale wrapper apparatus may also be used for wrapping bales on an individual basis.

A stretch film wrapping may be applied to an agricultural bale in order to protect the contents of the bale from the weather and, in the case of silage crops, to form a substantially airtight and watertight enclosure within which the crop can mature or ferment to form silage.

A pre-stretcher unit may be provided in the path of travel of a length or strip of film as it is withdrawn from a dispenser reel to be applied as overlapping pre-stretched windings to envelope the bale during the wrapping cycle.

The pre-stretcher may comprise two spaced-apart rollers around or over which the film passes, which rollers rotate at different circumferential speeds (stretch ratio) to stretch the film. The film strip is drawn from the dispenser reel, and passed through the pre-stretcher unit, under the action of a so-called "application force" generated by the relative rotation about the second axis, and rotation of the bale about its axis by the bale support.

Passage of the film strip through the pre-stretcher unit causes elongation of the film prior to application of the film strip as successive overlapping windings on the bale. The pre-stretched or elongated film subsequently tightens itself onto the outer surface of the bale under the action of the elastic energy (due to the application force) stored in the pre-stretched film. In this way, successive layers of coverage of film are applied to the bale.

The more elongation and application force is applied to the film, the thinner the film gets and the more susceptible to punctures and ruptures the film may become. This may have a negative effect on the airtightness of the bale, as air could ingress at the spots with punctures and ruptures. Also, when the film strip completely ruptures because of the combination of a puncture and the application force, the operator spends time on fixing the film strip or loading a new film roll, thus losing valuable wrapping operation time.

The pre-stretcher, for example, may alternatively be powered/driven to control rotation of the pre-stretcher, for example to reduce the application force. In this way punctures and ruptures may be minimized. Also, a power-driven pre-stretcher may provide for the use of higher stretch ratios.

Increasing the stretch ratio or elongation ratio may provide certain benefits. In particular, the greater the stretch ratio, the more elongation of the film, so the more economical the use of film. Also, the greater the stretch ratio, the higher the application force, the more tightly the strip is applied to the bale, so the better the air tightness of the bale.

However, due to the application force, in combination with the circular shape of a round bale, the film strip tends to experience a local decrease in (lateral) width of the stretch film sheet during application of the film sheet to the bale and when crossing a cylindrical edge (corner) of the bale. This is called necking of the film.

The local loss of film width may have a negative effect on the complete enveloping of the bale, because there is an increased risk of the subsequent overlapping film sheet not covering the preceding sheet (for example the subsequent loop of the same film sheet, which is positioned to overlap the preceding loop) in a correct way, leaving possibilities for locations not being covered with the correct amount of film. Air could ingress at those locations, which could lead to lead to premature degradation of the harvested crop inside the bale and may lead to the loss of the harvested crops inside the bale.

In order to achieve improved wrapping of the bale, it is desirable to reduce necking during film pre-stretching.

The invention is defined in any independent claims. Optional embodiments are set out in the dependent claims.

Embodiments of the invention will now be described, by way of example only, with reference to the accompanying drawings, in which:
Figure 1 is a representation of the principle of wrapping a round bale using two perpendicular axes;
Figure 2 is a representation of necking occurring when wrapping a bale according to related art;
Figure 3 is a simplified side view of bale wrapping including film pre-stretching according to the invention;
Figure 4 is a simplified top view of a film pre-stretcher;
Figure 5a is a perspective view of a standalone satellite bale wrapper;
Figure 5b is a perspective view of a standalone table bale wrapper;
Figure 5c is a simplified side view of a standalone inline bale wrapper;
Figure 6 is a simplified side view of a combination baler/bale wrapper;
Figure 7 is a perspective view of a pre-stretcher according to the invention;
Figure 8 is a simplified side view of a bale wrapping including film stretching according to another embodiment of the invention; and
Figure 9 is a flow chart showing an agricultural bale wrapping method according to the invention.

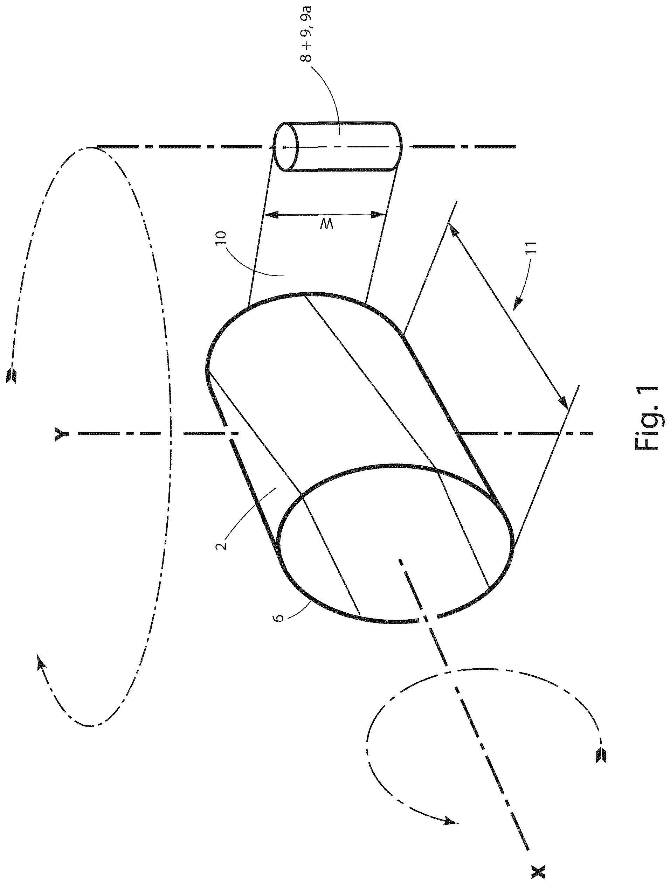

Figure 1 shows a simplified example of how a round bale 2 may be rotated about its longitudinal axis X (e.g. a first axis). The figure further shows an example of how the film dispenser may rotate around the bale 2 about a second axis, Y. In this way, the bale 2 may be wrapped with stretch film 10 in partially overlapping layers deposited onto the bale 2, as the bale 2 is rotated about its axis, X. Further, the film dispenser holder may provide relative rotation between a bale support and the film dispenser, about a second axis, Y. The second axis, Y, may extend substantially perpendicular to the first axis, X, so that the film 10 applied to the bale 2 forms a bale wrapping that covers a side surface and end faces of the bale 2, as shown in figure 1, for example. In some examples, the second axis, Y, may be substantially horizontal such that the film dispenser 12 rotates about a horizontal axis. In other examples, the second axis, Y, may be inclined to the horizontal or may be oriented vertically, as shown in figure 1.

The film dispenser holder may in some examples comprise two or more film dispensers, which may wrap the bale 2 concurrently in order to improve the efficiency of the wrapping. A film dispenser holder comprising only one film dispenser may be an alternative.

The film dispenser may be held by the film dispenser holder. The means configured to provide relative rotation may include a platform or support and a rotator. The means (for example the rotator) may rotate either the bale support or the film dispenser.

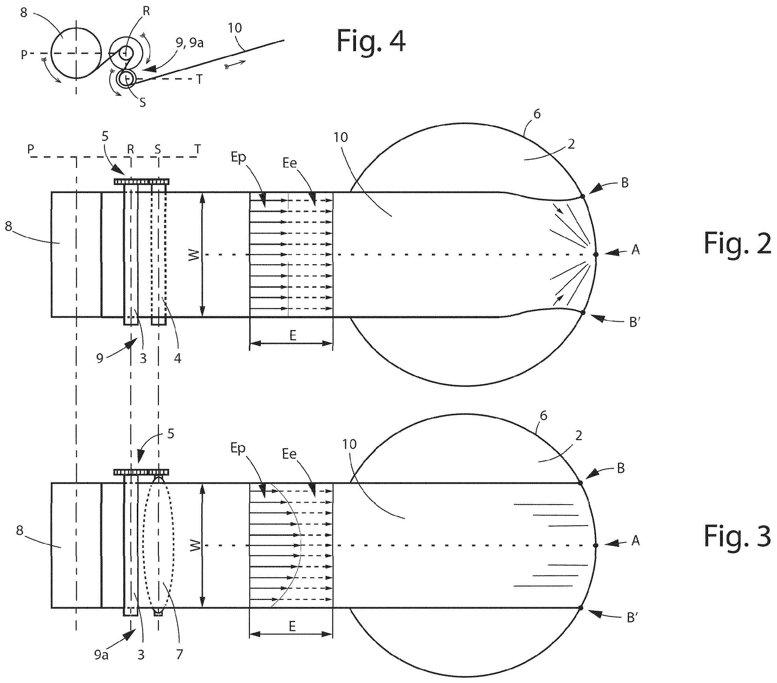

Figure 2 shows an explanatory example of how a film strip 10 may undergo necking when deposited on a bale 2 during wrapping. In this example, the film strip 10 is dispensed from a film reel by a dispenser combined with a pre-stretcher 9. The pre-stretcher elongates the film 10 by a predetermined amount. Elongating or stretching the film 10 before applying the film 10 to the bale 2 has the advantage of increasing the economic and environmental usage of the plastic stretch film 10. The pre-stretcher comprises at least two pre-stretcher rollers 3, 4, which rotate relative to each other at a predetermined angular speed ratio to elongate the film strip (for example determined by a gear combination 5). One roller 4 of the two rollers 3, 4 rotates at a faster angular speed in order for the film strip to be elongated/stretched (Ep) between the two rollers. It is the circumferential speed ratio of the two rollers that determine the amount of elongation of the film sheet 10. Since the rollers 3, 4 are equal in shape and diameter, it is the angular speed ratio of the two rollers 3, 4 that determines the amount of elongation, also called the stretch ratio. The film strip 10 is drawn from the dispenser reel, and passed through the pre-stretcher unit, under the action of the application force (Ee) generated by the relative rotation about the second axis, and rotation of the bale 2 about its own axis by the bale support. In other words, when applying a film sheet 10, the film sheet 10 is pulled by the bale 2 due to the relative rotation about the second axis, Y, and rotation of the bale 2 about its axis, X, by the bale support.

The film 10 is laid over a cylindrically shaped bale 2, also called round bale, thereby crossing the cylinder edges. The circular shape 6 makes it desirable for the film strip 10 to adapt to this circular shape. The film strip 10 by nature is flexible and can contain elasticity. In order to reach the substantially airtightness of the wrapped bale, it is preferable that the film strip 10 is laid tight against the cylindrical surfaces, the end-surfaces of the cylindrical bale 2 and thus also tight around the circular edges of the bale 2. It is the application force, Ee, that makes it possible for the film strip 10 to lay itself tight to the faces and around the corners of the bale 2 as the application force generates elasticity in the film sheet.

Due to the application force, Ee, in combination with the circular shape of a round bale 2, the film strip 10 tends to experience a local decrease in (lateral) width of the stretch film sheet 10 during application of the film sheet 10 to the bale 2 and when crossing a cylindrical edge (corner) of the bale 2. When a strip of film 10 is applied to the bale 2, and when the film sheet 10 crosses over the cylindrical edge of the bale 2, the application force, Ee, is initially originating from, or pulling from, the middle of the film sheet/strip 10 (shown in figure 2 as point A). As the edges (points B and B') of the film strip 10 are not touching the edges of the bale 2 yet, due to the circular character of those edges, the edges of the film strip 10 initially do not take up the application force, Ee. Therefore, the application force, Ee, urges the film strip 10 to initially stretch elastically from the middle of the film strip 10. The film strip 10 however would like to equal out the application force, Ee, over its entire width by pulling widthwise from within the film strip 10 itself. Subsequently the width of the film strip 10 decreases for a short distance (locally) until an equilibrium in the film strip 10 arises again and the film strip 10 is able to keep its width. The decrease in film sheet width can be observed as a short dip (or necking) in the film strip width on both film strip edges, as shown in figure 2.

The local loss of film width may have a negative effect on the complete enveloping of the bale 2, because there is an increased risk of the subsequent, overlapping film sheet not covering the preceding sheet (for example the subsequent loop of the same film sheet, which is positioned to overlap the preceding loop) in a correct way, leaving possibilities for locations not being covered with the correct amount of film. Air could ingress at those locations, which may lead to premature degradation of the harvested crop inside the bale 2 and may lead to the loss of the harvested crops inside the bale 2.

In the middle of the film strip (point A) where the application force, Ee, initially is pulling on the film strip 10, the application force, Ee, could lead to the film sheet locally getting thinner, which increases the risk of puncturing and/or rupturing of the film sheet 10. Puncturing of the film may lead to incorrect coverage of the bale which could lead to premature degradation of the harvested crop inside the bale 2 and may lead to the loss of the harvested crops inside the bale 2 as air could ingress at the spots with punctures. Rupturing of the sheet may lead to a decreased operational time of the bale wrapper as the operator has to solve the problem with the ruptured film sheet 10, leading to increased down time as well as increased resource use by the replacement amount of film sheet 10 used to fix the problem. The film strip 10 becoming critically thin is more relevant when using (starting from) thinner stretch film sheets or stretch films of lower quality (for example films containing or completely produced out of prior used and recycled materials). The local decrease of film sheet width is more critical when using a higher elongation ratio (stretch ratio) and/or using a higher application force, Ee, when applying the film sheet 10 to the bale 2. Higher stretch ratios and higher elongation ratios, so long as the process remains reliable, are, from an economic and environmental viewpoint, preferable as they lead to less film usage for a completely enveloped bale 2.

The application force, Ee, has the effect that elasticity, an elastic force, is present in the film sheet 10. The elasticity is part of the cause of the local decrease in film sheet width, but it advantageously provides the film sheet the possibility to apply itself tightly onto the faces and around the circular corners of the bale 2. On the other hand, too much application force, Ee, can lead to overstretching the film sheet 10, resulting in a film sheet 10 that is not able to apply itself tightly to the bale faces and corners. It is desirable to provide for a better film sheet usage from economic and environmental viewpoint, to minimize non-operational time because of film sheet 10 ruptures and disturbances in the enveloping process and to guarantee correct and substantially air-tight wrapping of bales 2.

In an example, there is provided an agricultural bale wrapper for wrapping an agricultural bale 2. The agricultural bale wrapper may comprise a bale support for supporting the bale 2 and rotating the bale 2 about a first axis, X. The bale wrapper may further comprise a film dispenser holding a roll 8 of stretch film 10. The bale wrapper may further comprise means configured to provide relative rotation between the bale support and the film dispenser about a second axis, Y, that extends substantially perpendicular to the first axis, X, so that the stretch film 10 applied to the bale 2 forms a bale wrapping that substantially completely covers the bale 2. The bale wrapper may further comprise at least one film pre-stretcher unit 9a configured to pre-stretch the stretch film 10 by an elongation amount before the stretch film 10 is applied to the bale 2. The at least one film pre-stretcher unit 9a may comprise at least two pre-stretcher rollers 3, 7 configured to perform elongation of the stretch film 10. The at least two pre-stretcher rollers 3, 7 may be configured to rotate relative to each other with a predetermined angular speed ratio 5. The stretch film 10 is drawn over the surfaces of the at least two pre-stretcher rollers 3, 7. The ratio of the circumferential speeds of the at least two pre-stretcher rollers 3, 7 may vary over the width, W, of the stretch film 10.

Figure 3 shows an arrangement intended to mitigate the problems described above. According to this arrangement, a varying distribution between plastic deformation (elongation, Ep) and elastic deformation (application force, Ee) along the width, W, of the film strip 10 may be provided, by controlling the plastic deformation, Ep, over the width of the film strip 10, instead of having a fixed distribution of the plastic and elastic deformation over the film sheet width, as in the example of figure 2.

In the arrangement of figure 3, substantially the middle of the film sheet 10 is preferably more plastic deformed (elongated, Ep) than the edges of the film 10. In this way, a distribution is reached where the edge areas of the film strip 10 are less plastically deformed and thus more elastically deformable, and the middle area of the film sheet is more plastically deformed and less elastically deformable. In this way, it is prevented that the middle area of the film 10, under influence of the application force, draws the edges of the film inwards, and it may still give the advantage to the edges of the film strip to apply itself tight onto the faces and around the corners of the bale 2 as the application force (elastic elongation, Ee) at the edges of the film strip is kept at the necessary level. The amount of elastic deformation may be controlled to prevent overstretching of the film sheet 10.

When the film sheet is drawn from a roll of film, and drawn over the pre-stretcher, the film 10 may act as one continuous sheet for the entire roll. The total elongation (E), an addition of the plastic elongation (plastic stretch, Ep) and elastic elongation (elastic stretch, Ee), may be the same and constant over the width of the film sheet. Therefore, by controlling the amount of plastic deformation over the width of the film, the amount of elastic deformation over the width of the film may be controlled.

Figure 3 shows a pre-stretcher 9a with two pre-stretcher rollers 3, 7 where the second (downstream) roller 7 rotates with a higher angular speed than the first (upstream) roller 3. The angular speed ratio between the rollers 3, 7 is predetermined (for example by a gear combination 5) and the downstream (second) roller 7 makes it possible that the circumferential speed of the roller varies over the width, W, of the film sheet 10 that is drawn over or guided along the pre-stretcher rollers 3, 7.

In some examples, the amount of plastic deformation can be controlled by the shape of the second pre-stretcher roller 7. Conventionally, the first and second rollers (for example rollers 3, 4 in figure 2) are identical in shape, diameter and length. Together with a predetermined angular speed ratio between the two rollers, the equal shape and diameter of the rollers result in a constant elongation of the film strip 10 over the width of the film strip 10. By altering the shape and/or the diameter of the second pre-stretcher roller 7, the stretch ratio and subsequently the plastic stretch or elongation (Ep) may be made different over the length (different along the central axis) of the pre-stretch rollers and thus over the width of the film strip 10. In this case, the circumferential speed (perimeter speed, peripheral speed) may vary over the width of the film strip 10 mitigating the mentioned problems and thus resulting in a better film sheet usage from an economic and environmental viewpoint, further leading to minimalization of non-operational time resulting from film sheet ruptures and disturbances in the enveloping process, and guaranteeing correct and substantially air-tight wrapping of bales 2.

When using higher stretch ratios to save on film usage, the application force may increase as more power may be needed to pull the film 10 through the pre-stretcher 9 at the higher stretch ratio. Higher application forces may increase the risk of loss of film strip width, overstretching the film 10, rupture of the film sheet 10 and disruptions of the bale-enveloping process.

Power-driven pre-stretcher units may for example be provided. These have the function of applying torque to the pre-stretcher unit 9, which therefore gives the ability to control the amount of application force, i.e. not the application force distribution over the width of the bale but a basic application force of the whole film strip.

A power-driven pre-stretcher unit is similar to a standard (non-powered) pre-stretcher unit, except that it is provided with a power source. The power source provides torque to a drive roller of the pre-stretcher unit. The torque exerts a force which forms a part, but not all, of the stretching force required to stretch the film 10. Therefore, the pull-off force (the application force) may be reduced. The torque applied to the pre-stretcher unit may therefore reduce the proportion of the application force which otherwise would be required in the absence of the power source.

Given that the application force is no longer the primary source of the stretching force on the film 10, the windings can be applied to the bale 2 under less tensile pulling force from the bale 2. This makes for a gentler wrapping action, with less tensile force applied to the film strip 10 as it forms successive overlapping windings around the bale 2. Advantages of a power-driven pre-stretcher include reduced risk of puncture (rupture) of the film 10 by outwardly protruding elements of the bale 10, even distribution of the film 10 on the surface of the bale 2 and less wrinkling of the film 10. Films which are more susceptible or sensitive to higher forces (for example films containing or completely produced out of prior used and recycled materials) can be more reliably used when applying these films 10 with less application force. This may lead to more economical and environmentally friendly use of the film 10 which is desirable to achieve cost effective and appropriately wrapped bales.

However, the use of power-stretch in the wrapping of bales 2 with a cylindrical profile (round bales) may lead to further considerations at the cylindrical edges of the bale 2.

When using non-powered pre-stretchers 9, the application force may have the effect that more elasticity is present in the film sheet 10. When using powered pre-stretchers 9, the application force may be lower and subsequently the elasticity in the film sheet 10 may be lower. This may lead to the film sheet 10 not being able to apply itself tightly around the circular corner of the bale 2 which increases the risk of leaving loose/untight pockets of film 10 at the corners of the bale 2. The untight or loose pockets may be a possible cause of the bale 2 not being covered with film 10 and subsequently the bale 2 is not substantially air-tight when covered with film 10. This may lead to premature degradation of the harvested crop inside the bale 2 and may lead to the loss of the harvested crops inside the bale 2.

An advantage associated with the described pre-stretcher 9a is that an adapted distribution of the plastic and elastic stretch/deformation over the width of the stretch film sheet 10 may be achieved. This may lead to advantages including being able to control the amount of application force at the edges of the film strip 10, thus making it possible to have enough application force on the edges in order for them to apply themselves to the faces and corners of the bale 2 to minimize the mentioned untight or loose pockets of film 10.

By less elongation resulting in less plastic deformation in certain regions of the film sheet 10, the application force may be higher in these regions of the film sheet 10. Subsequently, this allows for the film 10 to apply itself tightly to the circular corners of the round bale 2, without the risk of having loose pockets. It is therefore preferable that the edge regions of the film sheet 10 may be less plasticly deformed during pre-stretching compared to the middle area of the film sheet 10.

Figure 4 shows a top view of the path along which the film sheet 10 is drawn when passing from the film roll 8 over the rollers 3, 7 of the pre-stretcher 9a and towards the bale 2. In figure 4, the path of the film is illustrated in a simplified way from point P, through points R and S to point T. This film path from P through R and S to T is also illustrated in the figures 2 and 3, but then in an 'unfolded' manner for a better representation on how the path of the film strip, when passing from the film roll 8, leads towards the bale 2.

The pre-stretcher 9a may be used with several different types of agricultural bale wrapper.

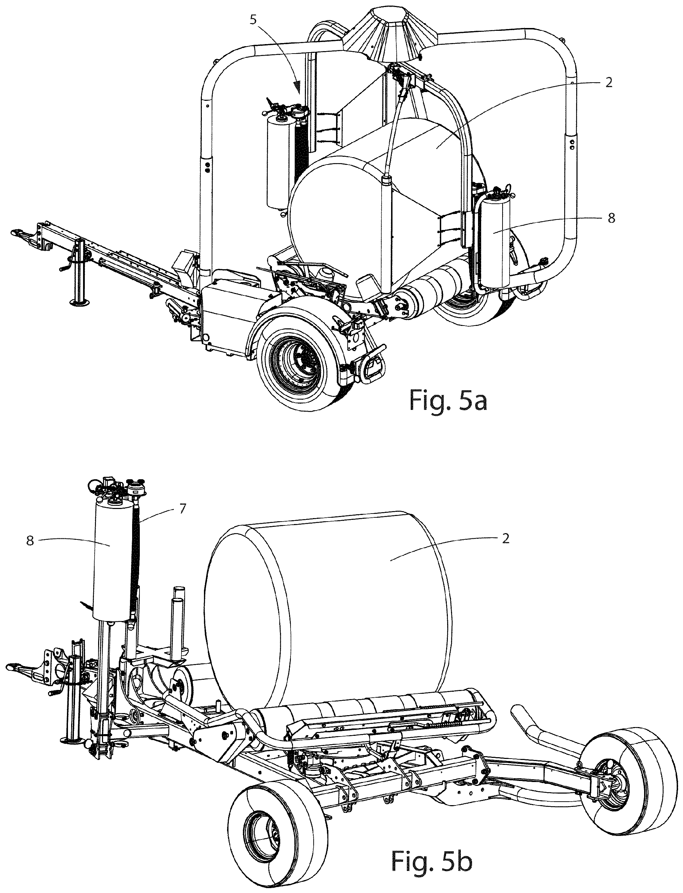

Optionally, as shown in figure 5a, the agricultural bale wrapper is a satellite-wrapper type agricultural bale wrapper. In this example, the bale wrapping is carried out by a satellite-type wrapping means. In this way, a first frame extends around the bale 2, to which a second frame, is rotatably attached. The second frame may be attached to a film dispenser, film roll 8 and pre-stretcher unit. The second frame may then be rotated such that the film roll rotates about the bale 2 while the film is dispensed onto the bale 2. In some examples, there may be two or more film dispensers, film rolls 8 and pre-stretcher units.

Optionally, as shown in figure 5b, the agricultural bale wrapper is a table-wrapper type agricultural bale wrapper. In this example, the bale wrapping is carried out by a table-type wrapping means. In this way, the bale 2 rests on a table comprising rollers or a belt so as to be rotatable about its longitudinal axis. The table may be rotatable about the vertical axis so as to rotate the bale 2. The film dispenser and pre-stretcher unit may be stationary and the bale 2 rotated so as to apply the film to the bale 2. In some examples, there may be two or more film dispensers, film rolls 8 and pre-stretcher units.

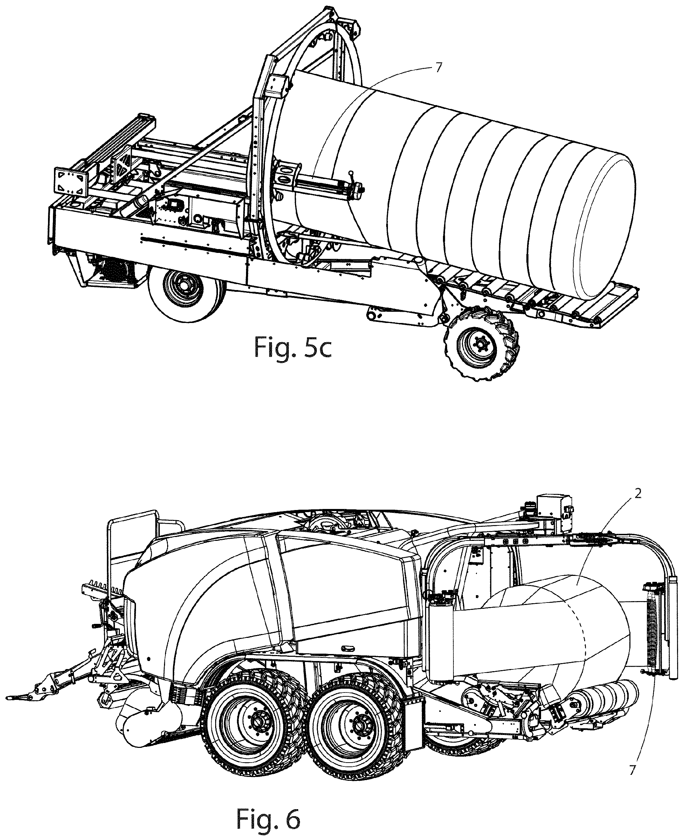

Optionally, as shown in figure 5c, the agricultural bale wrapper is a rotating ring-wrapper type agricultural bale wrapper. In this example, the bale wrapping is carried out by a rotating ring-type wrapping means. In this way, the bale 2 may be extended through a rotating ring, while at least one film dispenser is slidably attached to the ring so that it may be rotated around the bale 2 to deposit film onto the bale 2 as the bale 2 passes through the rotating ring. In some examples, there may be two or more film dispensers, film rolls 8 and pre-stretcher units.

With the satellite and table wrapper types, bales are wrapped on an individual basis. With the rotating ring-wrapper type shown in figure 5c, which is of the inline bale wrapper type, bales can either be wrapped on a multiple basis (more bales in one stack) or on an individual basis.

In a further example there is provided a baler/bale wrapper combination comprising the agricultural bale wrapper as described above.

Figure 6 shows an example of a combination baler and bale wrapper. The baler/bale wrapper combination may comprise a bale chamber inside which agricultural crops may be compressed and formed into round bales 2. The bale 2 may be ejected from the bale chamber onto a bale wrapper section of the baler/bale wrapper combination. Figure 6 shows an example of a combination baler/bale wrapper, where the bale wrapper is a satellite wrapper. However, table wrappers, rotating ring wrappers or any other suitable type of wrapper may be used in a combination baler/bale wrapper.

In some examples, the bale wrapper types described above may be stationary. Alternatively, they may be mobile and may be self-propelled, or can be towed by a tractor, for driving on public roads and during operation in the field.

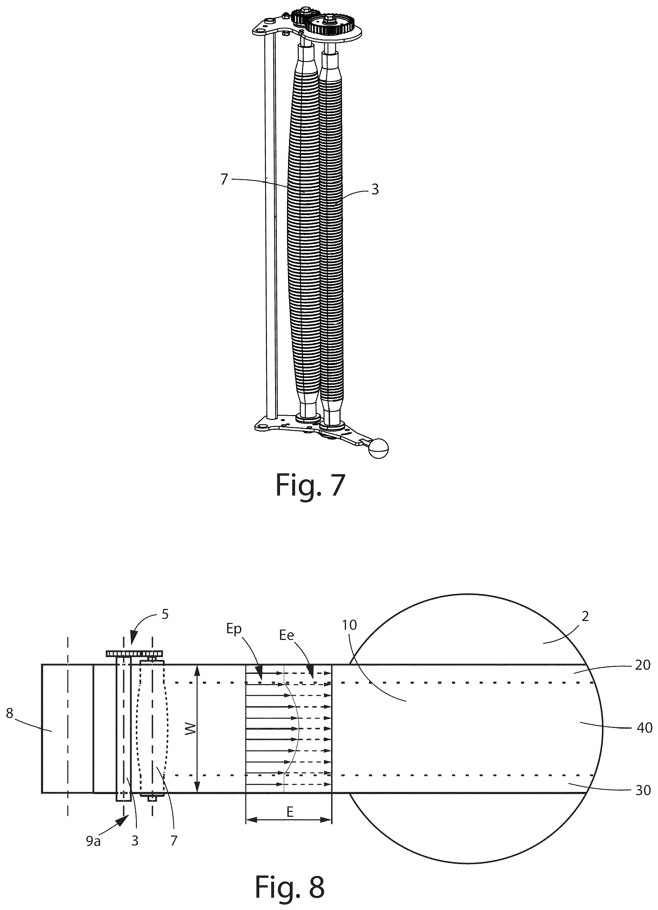

Figure 7 shows an example of pre-stretcher rollers 3, 7 in isolation.

The ratio of the circumferential speeds of the at least two pre-stretcher rollers 3, 7 may vary in an area starting at 15% and ending at 85% of the width, W, of the stretch film 10. As shown in figure 2 it may be beneficial to more closely match the curvature 6 of the round bale 2 to reduce the necking effect of the stretch film 10 and/or to prevent the loose/untight pockets of the stretch film 10. Increasing the speed ratio, and therefore the plastic elongation (Ep), in a region approximately 15% of the width, W, of the film 10 away from the edges of the film 10 at either edge, allows the area most likely to result in necking or to result in loose/untight pockets to be pre-stretched to a more appropriate degree without compromising the way in which the film 10 is overlapped to create a complete covering of the bale 2.

In a further example, the ratio of the circumferential speeds of the at least two pre-stretcher rollers 3, 7 may vary in an area starting at 25% and ending at 75% of the width, W, of the stretch film 10.

In a further example, the ratio of the circumferential speeds of the at least two pre-stretcher rollers 3, 7 may vary in an area starting at 33% and ending at 66% of the width, W, of the stretch film 10.

In a further example, the ratio of the circumferential speeds of the at least two pre-stretcher rollers 3, 7 may vary in an area starting between 15% and 33% and ending between 66% and 85% of the width, W, of the film 10.

Figure 8 shows an example according to the explanation above in which a varying distribution between plastic deformation (elongation, Ep) and elastic deformation (application force, Ee) along the width, W, of the film strip 10 may be provided. As shown, an area starting at 15% and ending at 85% of the width, W, of the stretch film 10 is provided in which the ratio of the circumferential speeds of the at least two pre-stretcher rollers 3, 7 is varied. That is to say, areas 20 and 30, located at either side of a central area along the width, W, of the film 10, have a constant circumferential speed ratio. The area 40, in the centre, along the width, W, of the film 10, has a varying circumferential speed ratio. The film pre-stretcher unit 9a may comprise a drive unit configured to power the film pre-stretcher unit 9a during the application of the stretch film 10 to the bale 2.

An advantage associated with including a drive unit to drive or power a film pre-stretcher unit 9a is that higher stretch ratios may be achieved and thus less film consumption per bale 2. This may lower the overall cost of baling and use fewer resources per bale 2 which is also better for the environment. Furthermore, power stretching controls the general amount of application force lengthwise in the film strip. In that case, also thinner films or lower quality films (for example films containing or completely produced out of prior used and recycled materials) which are more susceptible to higher application forces, may be more reliably used for wrapping a bale.

A largest ratio of circumferential speed may be substantially in the middle of the width, W, of the stretch film 10.

In this way, when the film is deposited onto the bale 2, the film is pre-stretched based on the shape of the bale 2, which may minimise necking or loose/untight pockets resulting from the tensile force at the bale 2 during deposition.

The ratio of circumferential speed may be between 5 and 33% larger in the middle compared to at the edges of the stretch film 10.

A circumferential speed ratio of between 5 and 33% may more closely match the curvature 6 of the round bale 2. More specifically, the relative amount of pre-stretching applied to the film may reduce any necking or loose pockets that would otherwise occur when applying the film to the round bale 2. A round bale 2 may typically be 100cm to 150cm in diameter and 120cm in width. Therefore, the circumferential speed ratio of between 5 and 33% provides a close fit, in particular at the corner of a round bale between the cylindrical surface and the substantially circular end face. However, other bale sizes are envisaged.

The at least one of the two pre-stretcher rollers 7 may have a larger diameter in the middle of the roller 7 than the diameter at the ends of the roller 7.

In some examples, the film 10 may be applied to the bale 2 substantially across the centre of the bale 2. That is to say, the film may be extended so as to pass over the central longitudinal axis of the bale 2, when being applied to the circular end faces of the round bale 2. Therefore, having a larger diameter in the middle of the roller 7 may more appropriately match the shape of the bale 2 for wrapping.

Optionally, the diameter in the middle of the pre-stretcher roller 7 is between 5 and 33% larger compared to the diameter at the ends of the roller 7.

At least one of the two pre-stretcher rollers 7 may have a gradually varying diameter.

A gradually varying diameter may allow the film to be appropriately pre-stretched by different amounts across its width, while avoiding sudden changes in pre-stretching amount which may lead to undesired breakage or inconsistent application of the film to the bale 2. A gradual transition of circumferential speed ratio may help to achieve an evenly pre-stretched film sheet 10.

Optionally the length (along the axis) of the at least one of the two pre-stretcher rollers 7 may be divided into sections, where each section has a different circumferential speed ratio. The middle section of the pre-stretcher roller (in the middle of its length) 7 may have a larger circumferential speed ratio compared to the edge sections. For example, the roller 7 may be built up of modules which may be assembled into a roller 7, which may be combined or positioned appropriately to achieve a desired shape, based on the shape of the bale 2 for example. Further, in some examples the middle section may have a larger diameter compared to the edge sections, meaning that the diameter in the middle of the roller is larger than the diameter at the ends of the roller.

The predetermined angular speed ratio of the at least two pre-stretcher rollers 3, 7 may vary during the process of enveloping the bale 2 with stretch film 10. By varying the predetermined angular speed, also the circumferential speed of the rollers may be changed, i.e. not the circumferential speed distribution over the width of the bale but a basic circumferential speed of the whole film strip.

Gearing may be provided to vary the angular speed ratio of the pre-stretcher rollers 3, 7. Varying the angular speed ratio may improve the wrapping process by increasing control. It may therefore be possible to use less film on areas of the bale 2 where less film is needed. Other methods (other than gearing) for varying the predetermined angular speed ratio of the at least two pre-stretcher rollers may be possible, for example the pre-stretcher may be equipped with a drive motor for each of the at least two pre-stretcher rollers. The angular speed ratio of both drive motors may be controlled by a controller during the process of enveloping the bale 2 with stretch film 10.

The variation in ratio of the circumferential speed of the at least two pre-stretcher rollers 3, 7 may be adjusted based on a type of stretch film 10.

Film has different elastic and plastic qualities based on the composition. With a trend towards using recycled materials, the amount by which film may be pre-stretched elastically may be reduced and so the variation in the ratio of the circumferential speed of the rollers may be reduced accordingly to avoid unintended breakage, while reducing the amount of film used overall.

The variation in ratio of the circumferential speed of the at least two pre-stretcher rollers 3, 7 may be adjusted to a shape and/or size of the bale 2.

The variation in ratio of the circumferential speed of the at least two pre-stretcher rollers 3, 7 may be automatically adjusted during the process of the enveloping of the bale 2. In some examples, the variation in the ratio of the circumferential speed of the at least two pre-stretcher rollers 3, 7 may be manually adjusted.

The width, W, of the stretch film 10 may be smaller than the width 11 of the bale 2. In some examples, the width 11 of the bale 2 may be the distance between the two substantially circular end faces.

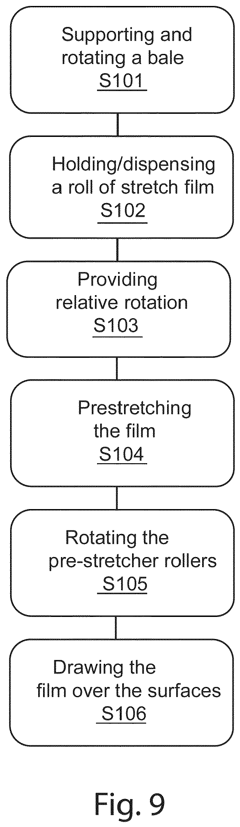

Figure 9 shows an example of an agricultural bale wrapping method. The agricultural bale wrapping method may comprise supporting S101 a bale 2 on a bale support and rotating the bale 2 about a first axis, X. The method may further comprise holding S102 a roll 8 of stretch film 10, by a film dispenser, to dispense the stretch film 10. The method may further comprise providing S103 relative rotation between the bale support and the film dispenser about a second axis, Y, that extends substantially perpendicular to the first axis, X, so that the stretch film 10 applied to the bale 2 forms a bale wrapping that substantially completely covers the bale 2. The method may further comprise pre-stretching S104 the stretch film 10, by at least one film pre-stretcher unit 9a, by an elongation amount before the stretch film 10 is applied to the bale 2. The method may further comprise rotating S105 at least two pre-stretcher rollers 3, 7 of the film pre-stretcher unit 9a relative to each other with a predetermined angular speed ratio 5. The method may further comprise drawing S106 the stretch film 10 over the surfaces of the at least two pre-stretcher rollers 3, 7, where the ratio of the circumferential speeds of the at least two pre-stretcher rollers 3, 7 may vary over the width, W, of the stretch film 10.

Various modifications of the invention are of course possible. The subject matter defined in each of the claims may be combinable with that of any other claim. Similarly, examples and embodiments described above are for illustrative purposes only and features of one example may be combinable with those of other examples, as will be clear to the skilled person.

## Claims

1. An agricultural bale wrapper for wrapping an agricultural bale (2) comprising:
a bale support for supporting the bale (2) and rotating the bale (2) about a first axis (X);
a film dispenser holding a roll (8) of stretch film (10),
means configured to provide relative rotation between the bale support and the film dispenser about a second axis (Y) that extends substantially perpendicular to the first axis (X) so that the stretch film (10) applied to the bale (2) forms a bale wrapping that substantially completely covers the bale (2);
at least one film pre-stretcher unit (9a) configured to pre-stretch the stretch film (10) by an elongation amount before the stretch film (10) is applied to the bale (2);
the film pre-stretcher unit (9a) comprising at least two pre-stretcher rollers (3, 7) configured to perform elongation of the stretch film (10);
wherein the at least two pre-stretcher rollers (3, 7) are configured to rotate relative to each other with a predetermined angular speed ratio (5), and
the stretch film (10) is drawn over the surfaces of the at least two pre-stretcher rollers (3, 7); wherein
the ratio of the circumferential speeds of the at least two pre-stretcher rollers (3, 7) varies over the width (W) of the stretch film (10).

2. The agricultural bale wrapper of claim 1, wherein the ratio of the circumferential speeds of the at least two pre-stretcher rollers (3, 7) varies in an area starting at 15% and ending at 85% of the width (W) of the stretch film (10).

3. The agricultural bale wrapper of claim 1 or claim 2, wherein the film pre-stretcher unit (9a) comprises a drive unit configured to power the film pre-stretcher unit (9a) during the application of the stretch film (10) to the bale (2).

4. The agricultural bale wrapper of any preceding claim, wherein a largest ratio of circumferential speed is substantially in the middle of the width (W) of the stretch film (10).

5. The agricultural bale wrapper of any preceding claim, wherein the ratio of circumferential speed is between 5 and 33% larger in the middle compared to the circumferential speed at the edges of the stretch film (10).

6. The agricultural bale wrapper of any preceding claim, wherein the ratio of circumferential speed gradually reduces towards the edges of the stretch film (10).

7. The agricultural bale wrapper of any preceding claim, wherein the at least one of the two pre-stretcher rollers (7) has a larger diameter in the middle of the roller (7) than the diameter at the ends of the roller (7).

8. The agricultural bale wrapper of any preceding claim, wherein at least one of the two pre-stretcher rollers (7) has a gradually varying diameter.

9. The agricultural bale wrapper of any preceding claim, wherein the predetermined angular speed ratio of the at least two pre-stretcher rollers (3, 7) varies during the process of enveloping the bale (2) with stretch film (10).

10. The agricultural bale wrapper of any preceding claim, wherein the variation in ratio of the circumferential speed of the at least two pre-stretcher rollers (3, 7) is adjusted based on a type of stretch film (10).

11. The agricultural bale wrapper of any preceding claim, wherein the variation in ratio of the circumferential speed of the at least two pre-stretcher rollers (3, 7) is adjusted to a shape and/or size of the bale (2).

12. The agricultural bale wrapper of any preceding claim, wherein the variation in ratio of the circumferential speed of the at least two pre-stretcher rollers (3, 7) is automatically adjusted during the process of the enveloping of the bale (2).

13. The agricultural bale wrapper of any preceding claim, wherein the width (W) of the stretch film (10) is smaller than the width (11) of the bale (2).

14. An agricultural bale wrapping method comprising:
supporting a bale (2) on a bale support and rotating the bale (2) about a first axis (X);
holding a roll (8) of stretch film (10), by a film dispenser, to dispense the stretch film (10);
providing relative rotation between the bale support and the film dispenser about a second axis (Y) that extends substantially perpendicular to the first axis (X) so that the stretch film (10) applied to the bale (2) forms a bale wrapping that substantially completely covers the bale (2);
pre-stretching the stretch film (10), by at least one film pre-stretcher unit (9a), by an elongation amount before the stretch film (10) is applied to the bale (2);
rotating at least two pre-stretcher rollers (3, 7) of the film pre-stretcher unit (9a) relative to each other with a predetermined angular speed ratio (5), and
drawing the stretch film (10) over the surfaces of the at least two pre-stretcher rollers (3, 7); wherein
the ratio of the circumferential speeds of the at least two pre-stretcher rollers (3, 7) varies over the width (W) of the stretch film (10).
